(19) Europäisches Patentamt
European Patent Office
Office européen des brevets

(11) Veröffentlichungsnummer : **0 022 497**
**B1**

(12) **EUROPÄISCHE PATENTSCHRIFT**

(45) Veröffentlichungstag der Patentschrift : **11.05.83**

(51) Int. Cl.³ : **C 08 G 18/76**, C 08 G 18/10

(21) Anmeldenummer : **80103637.7**

(22) Anmeldetag : **27.06.80**

# (54) Verfahren zur Herstellung von elastischen, gegebenenfalls zellförmigen, Polyurethanharnstoffen.

(30) Priorität : **12.07.79 DE 2928182**

(43) Veröffentlichungstag der Anmeldung : **21.01.81 Patentblatt 81/03**

(45) Bekanntmachung des Hinweises auf die Patenterteilung : **11.05.83 Patentblatt 83/19**

(84) Benannte Vertragsstaaten : **AT BE DE FR GB IT NL SE**

(56) Entgegenhaltungen :
**DE A 2 635 400**
**FR A 2 352 846**
**FR A 2 380 309**
**US A 3 188 302**

(73) Patentinhaber : **BAYER AG**
**Zentralbereich Patente, Marken und Lizenzen**
**D-5090 Leverkusen 1, Bayerwerk (DE)**

(72) Erfinder : **Grögler, Gerhard, Dr.**
**von Diergardtstrasse 46**
**D-5090 Leverkusen (DE)**
Erfinder : **Schwindt, Jürgen, Dr.**
**Kleistplatz 4**
**D-5090 Leverkusen (DE)**
Erfinder : **Ganster, Otto, Dr.**
**Berliner Strasse 64**
**D-5090 Leverkusen (DE)**
Erfinder : **Meiners, Hans-Joachim, Dr.**
**Ringstrasse 25**
**D-5090 Leverkusen (DE)**
Erfinder : **Ruprecht, Hans-Dieter, Dr.**
**Andreas-Gryphiusstrasse 3**
**D-5000 Köln 80 (DE)**

**EP 0 022 497 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von elastischen, gegebenenfalls zellförmigen, Polyurethanharnstoffen

Die Erfindung betrifft die Herstellung von Polyurethanharnstoff-Elastomeren mit verbesserten mechanischen Eigenschaften nach dem Gießverfahren. Die Verbesserung wird erreicht, indem man bestimmte Isomerengemische von Diphenylmethandiisocyanat als Isocyanatkomponente und aromatische Diamine, die in ortho-Stellung zur Aminogruppe mindestens einen Alkylsubstituenten besitzen, beim Aufbau der Elastomeren verwendet.

Es ist bekannt (s. z. B. Vieweg-Höchtlen, Kunststoff-Handbuch, Bd. VII; Carl-Hanser-Verlag, München 1966, S. 206 bis 297), daß sich NCO-Gruppen aufweisende Präpolymere auf Basis von höhermolekularen Polyolen (z. B. Polyether oder Polyester) und symmetrischen Diisocyanaten, wie z. B. 4,4'-Diphenylmethandiisocyanat oder 1,5-Naphthylendiisocyanat nach dem Gießverfahren mit kurzkettigen Diolen, vorzugsweise Butandiol-1,4, als Kettenverlängerungsmittel zu hochwertigen Elastomeren verarbeiten lassen. Voraussetzung für eine einwandfreie Qualität der Elastomeren ist jedoch, wie dem Fachmann bekannt ist, daß als Isocyanatkomponente chemisch möglichst reine Diisocyanate eingesetzt werden. So genügen z. B. bereits 10 % 2,4'-Diphenylmethandiisocyanat im 4,4'-Diphenylmethandiisocyanat, um das Werteniveau dieser Elastomeren deutlich zu verschlechtern. Hieraus hergestellte Schuhsohlen werden z. B. im Vergleich zu solchen auf Basis von reinem 4,4'-Diphenylmethandiisocyanat relativ rasch brüchig.

Zum Stand der Technik gehört auch die Herstellung von Polyurethanharnstoffelastomeren nach dem Gießverfahren, wobei NCO-Gruppen aufweisende Präpolymere (im allgemeinen unter Verwendung von Toluylendiisocyanat aufgebaut) mit aromatischen Diaminen als Kettenverlängerungsmittel umgesetzt werden. Auch auf diese Weise erhält man hochwertige Elastomere, wie dies z. B. für 3,3'-Dichlordiphenylmethan-4,4'-diamin als Kettenverlängerungsmittel in US-PS 3 188 302 oder für 3,5-Diamino-4-chlorbenzoesäureisobutylester in DE-AS 1 803 635 eingehend beschrieben wird.

Versucht man, derartige Polyurethanharnstoffelastomere nach dem Gießverfahren unter Verwendung von Diphenylmethandiisocyanat als Isocyanatkomponente herzustellen, dann treten sowohl Probleme hinsichtlich der Verarbeitbarkeit des Präpolymeren als auch der mechanischen Eigenschaften des Endproduktes auf:

Präpolymere, die aus 1 Mol höhermolekularer Polyhydroxylverbindung und 2 Molen (oder weniger) an 4,4'-Diisocyanatodiphenylmethan aufgebaut sind, besitzen eine sehr hohe Viskosität, was zu großen Verarbeitungsschwierigkeiten, insbesondere auf Hochdruckmaschinen, führt.

Auf Hochdruckmaschinen können Präpolymere mit Viskositäten von mehr als 2 000 mPa.s nicht mehr einwandfrei vermischt werden. Man kann andererseits zur Senkung der Viskosität die Temperatur nicht wesentlich über 70 °C hinaus erhöhen, da mit zunehmender Temperatur die Reaktionsgeschwindigkeit steigt und die Stabilität der Präpolymeren deutlich abnimmt.

Infolge der hohen Viskosität der Präpolymeren auf Basis von 4,4'-Diphenylmethandiisocyanat besitzen die Gießansätze schlechte Fließfähigkeit und sind nur schwer zu homogenisieren, so daß keine großvolumigen Formteile gegossen werden können. Ein weiterer Nachteil derartiger Präpolymerer ist ihre unbefriedigende Lagerstabilität (Dimerisierung der Isocyanatgruppen zu Uretdiongruppen).

Eine Möglichkeit, die Viskosität der Präpolymeren zu erniedrigen und gleichzeitig ihre Lagerstabilität zu verbessern besteht darin, bei ihrer Herstellung mehr als 2 Mol Isocyanat pro Mol des höhermolekularen Diols einzusetzen, so daß das Präpolymere größere Mengen an freiem monomerem 4,4'-Diisocyanatodiphenylmethan enthält. Nachteilig ist hierbei jedoch, daß auch bei Verwendung wenig reaktiver Diamine die Reaktionsgeschwindigkeit bei der Kettenverlängerungsreaktion mit wachsendem Gehalt des Präpolymeren an freiem Diisocyanat stark zunimmt, wodurch die Gießzeiten des Reaktionsansatzes zu kurz werden.

Versucht man, die hohe Reaktionsgeschwindigkeit des Gießansatzes dadurch zu senken, daß man die Aminkomponente mit Polyolen verdünnt, so tritt eine weitere Schwierigkeit auf: Die hochsymmetrischen Hartsegmente, die sich aus 4,4'-Diphenylmethandiisocyanat und aromatischen Diaminen bilden, sind im Reaktionsgemisch nicht ausreichend löslich; diese Hartsegmente fallen daher überwiegend aus, ohne daß sie in ein Polyurethanmolekül eingebaut werden. Infolgedessen sind die mechanischen Eigenschaften dieser Elastomere unbefriedigend.

Schließlich lassen sich Präpolymere auf Basis von reinem 4,4'-Diphenylmethandiisocyanat infolge der hohen Reaktivität der beiden Isocyanatgruppen mit hochreaktiven aromatischen Diaminen, wie z. B. alkylsubstituierten Toluylendiaminen und Phenylendiaminen, in keinem Fall einwandfrei verarbeiten.

Aufgabe der vorliegenden Erfindung war es daher, Gießsysteme zur Verfügung zu stellen, welche einerseits zu Elastomeren mit dem hervorragenden Eigenschaftsbild der Produkte auf Basis von 4,4'-Diisocyanatodiphenylmethan führen, andererseits jedoch eine verbesserte Verarbeitbarkeit auch bei Verwendung der technisch interessanten, hochreaktiven, alkylsubstituierten Phenylendiamine und Diaminodiphenylmethane besitzen.

Überraschenderweise konnte dieses Problem gelöst werden, indem beim Aufbau der Präpolymerkomponente bestimmte Isomerengemische von Diisocyanatodiphenylmethan eingesetzt wurden. Dies ist deshalb als überraschend anzusehen, da aufgrund der oben diskutierten Erfahrungen bei diolverlängerten Gießsystemen erwartet werden mußte, daß auch die Eigenschaften von Polyurethanharnstoffelastomeren beim Übergang von reinem 4,4'-Diisocyanatodiphenylmethan zu Isomerengemischen erheblich verschlechtert würden.

Gegenstand der vorliegenden Erfindung ist somit ein Verfahren zur Herstellung von gegebenenfalls zellförmigen Polyurethanharnstoffelastomeren mit einer Rohdichte von mehr als 200 kg/$m^3$ durch Gießen eines Reaktionsgemisches aus

A. einem NCO-Präpolymeren, hergestellt aus

a) 1 Mol einer mindestens 2 zerewitinoffaktive Wasserstoffatome aufweisenden Verbindung vom Molekulargewicht 400 bis 10 000, vorzugsweise einer Polyhydroxylverbindung, und

b) 2 bis 10 Mol, vorzugsweise 2,5 bis 5 Mol, Diisocyanatodiphenylmethan,

B. einem aromatischen Diamin, gegebenenfalls

C. bis zu 50 Mol.-%, bevorzugt weniger als 30 Mol.-%, bezogen auf Komponente (B), eines primäre Hydroxylgruppen aufweisenden Polyols mit einem Molekulargewicht von 62 bis 6 000, vorzugsweise 1 000 bis 5 000, sowie gegebenenfalls

D. Treibmitteln, Aktivatoren, Füllstoffen und weiteren an sich bekannten Zusatzstoffen,

wobei das Äquivalentverhältnis zwischen Komponente (A) und den Komponenten (B) + (C) zwischen 0,9 : 1 und 1,3 : 1, vorzugsweise zwischen 1,0 : 1 und 1,15 : 1, liegt, in Formen, Aushärten des Reaktionsgemisches in der Form und anschließende Entformung, welches dadurch gekennzeichnet ist, daß das NCO-Präpolymere (A) unter Verwendung eines Isomerengemisches, bestehend aus

i) 15 bis 80 Mol.-%, vorzugsweise 35 bis 70 Mol.-%, an 2,4'-Diisocyanatodiphenylmethan,

ii) 20 bis 85 Mol.-%, vorzugsweise 30 bis 65 Mol.-%, an 4,4'-Diisocyanatodiphenylmethan und

iii) 0 bis 20 Mol.-%, vorzugsweise 0 bis 15 Mol.-%, an 2,2'-Diisocyanatodiphenylmethan,

hergestellt worden ist und daß man als aromatische Diamine (B) solche einsetzt, die in ortho-Stellung zur Aminogruppe mindestens einen Alkylsubstituenten besitzen.

Besonders bevorzugt werden zur Herstellung der Präpolymeren (A) bifunktionelle Polyester vom Molekulargewicht 1 000 bis 3 000 und Polyetherdiole vom Molekulargewicht 1 000 bis 5 000 eingesetzt.

Als aromatische Diamine (B) werden bevorzugt alkylsubstituierte Phenylendiamine und Diphenylmethandiamine verwendet.

Als Abmischkomponente (C) für das Diamin dienen besonders bifunktionelle und polyfunktionelle Polyether vom Molekulargewicht 1 000 bis 5 000 mit endständigen Ethylenoxidgruppen, Polyester- und Polycarbonatdiole vom Molekulargewicht 1 000 bis 2 500, sowie Polytetrahydrofurane vom Molekulargewicht 1 000 bis 2 000.

Die Komponenten (a) und (b) werden bei der Herstellung des Präpolymeren in einem solchen Verhältnis umgesetzt, daß auf 1 Äquivalent Polyol mindestens 2 Äquivalente Diphenylmethandiisocyanat-Isomerengemisch kommen. In der Regel liegt ein Überschuß an freiem Isocyanat vor, d. h. das Äquivalentverhältnis Polyol/Diisocyanat beträgt etwa 1 : 2,5 bis 1 : 5.

Die Menge der Kettenverlängererkomponente hängt davon ab, ob das Diamin mit Polyol abgemischt ist oder in reiner Form vorliegt. Daher kann die Menge der Aminkomponente zwischen 10 und 100 Gew.-Teilen/100 Gew.-Teilen Präpolymer schwanken, vorzugsweise werden 15 bis 60 Teile Kettenverlängerer pro 100 Gew.-Teilen Präpolymer eingesetzt. In der Regel werden die Präpolymeren bei Kennzahlen von 90 bis 130, bevorzugt bei Kennzahlen von 100 bis 115, mit dem Amin bzw. Amin/Polyolgemisch zur Reaktion gebracht.

Füllstoffe können sowohl im Präpolymeren mit Anteilen von etwa 1 bis 25 Gew.-% als auch im Amin/Polyolgemisch in Mengen von etwa 1 bis 35 Gew.-% enthalten sein. Die eingesetzten Füllstoffe, wie z. B. Ruße oder gefällte Kieselsäuren sowie organische Füllstoffe (z. B. Styrol-Acrylnitril-gepfropfte Polyether oder Polyhydrazodicarbonamide in Polyethern) können sowohl die mechanischen Eigenschaften der Elastomeren allgemein verbessern als auch nur bestimmte Eigenschaften des aus dem Elastomer gefertigten Gebrauchsgegenstandes, wie z. B. die Hitzebeständigkeit oder die Rutschfestigkeit (bei Schuhsohlen) günstig beeinflussen.

Das erfindungsgemäße Gießverfahren besitzt folgende, z. T. unerwartete und überraschende Vorteile :

1. Die zur Präpolymerherstellung eingesetzten Diphenylmethandiisocyanatgemische sind bei Temperaturen >10 °C flüssig und daher leicht verarbeitbar.

2. Es werden Elastomere mit außerordentlich gutem mechanischem Werteniveau erhalten, wobei das Werteniveau der Elastomere aus Gießsystemen auf Basis von 4,4'-Diphenylmethandiisocyanat und kurzkettigen Diolen erreicht oder sogar übertroffen wird.

3. Auch aus Systemen, die durch einen hohen Diisocyanatüberschuß gekennzeichnet sind, lassen sich — im Gegensatz zu solchen auf Basis von 4,4'-Diphenyldiisocyanat — Elastomere mit hohem mechanischem Werteniveau herstellen.

4. Die Lagerstabilität der Präpolymeren ist deutlich besser als bei jenen auf Basis von 4,4'-Diphenylmethandiisocyanat.

5. Aufgrund der niedrigen Viskosität der Gießansätze wird das Vergießen, speziell auf Hochdruckmaschinen, wesentlich erleichtert, z. T. erst ermöglicht. Aus der mit zunehmendem Anteil an unsymmetrischem 2,4'-Diisocyanat fallenden Reaktionsgeschwindigkeit ergeben sich weitere Vorteile : Komplizierte Formen lassen sich einwandfrei füllen, wodurch die Formteilqualität ansteigt, d. h. der Ausschuß sinkt.

6. Wegen der relativ geringen Reaktivität der Präpolymeren lassen sich nunmehr auch hochreaktive aromatische Diamine verarbeiten, die mit Präpolymeren auf Basis von reinem 4,4'-Diphenylmethandiisocyanat nicht mehr vergießbar sind.

Für die Herstellung des Präpolymeren (A) in Betracht kommende Verbindungen (a) sind solche mit mindestens zwei gegenüber Isocyanaten reaktionsfähigen Wasserstoffatomen und einem Molekulargewicht in der Regel von 400 bis 10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 500 bis 8 000, vorzugsweise 800 bis 5 000, z. B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind :

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt :

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure ; Terephthalsäuredimethylester und Terephthalsäure-bis-glykolester. Als mehrwertige Alkohole kommen z. B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z. B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischäther, Polythioätherester oder Polythioätheresteramide.

Als Polyacetale kommen z. B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751 ; DE-Offenlegungsschrift 2 605 024).

Zu den Polyesteramiden und Polyamiden zählen z. B. die aus mehrwertigen gesättigten oder

ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z. B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z. B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin bzw. Acylharnstoffgruppen aufweisende Polyhydroxylverbindungen (DE-Offenlegungschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth) acrylnitril, (Meth) acrylamid oder OH-funktionellen (Meth) acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400-10 000, z. B. Mischungen von Polyäthern und Polyestern, eingesetzt werden.

Von besonderem Vorteil ist es dabei in manchen Fällen, niedrigschmelzende und hochschmelzende

Polyhydroxylverbindungen miteinander zu kombinieren (DE-Offenlegungsschrift 2 706 297).

Die als Isocyanatkomponente (b) bei der Herstellung des NCO-Präpolymeren (A) einzusetzenden Isomerengemische werden nach an sich bekannten Verfahren erhalten, so zum Beispiel durch fraktionierte Destillation des rohen Polyphenyl-polymethylen-polyisocyanats, wobei sich genau definierte Mischungen von 2,4'-/4,4'-Diphenylmethandiisocyanat isolieren lassen.

Gegebenenfalls können erfindungsgemäß auch — in Mengen bis zu 10 Mol.-%, bezogen auf Komponente (b), weitere aus der Polyurethanchemie an sich bekannte Polyisocyanate mitverwendet werden.

Die für das erfindungsgemäße Verfahren geeigneten aromatischen Diamine müssen in o-Stellung zur Aminogruppe mindestens einen Alkylsubstituenten, vorzugsweise mit 1 bis 3 Kohlenstoffatomen, besitzen. Dazu gehören z. B. 1,3-Diethyl-2,4-diaminobenzol, 2,4-Diaminomesitylen, 1-Methyl-3,5-diethyl-2,4-diaminobenzol, 1-Methyl-3,5-diethyl-2,6-diaminobenzol, 1,3,5-Triethyl-2,6-diaminobenzol oder 3,5,3',5'-Tetraethyl-4,4'-diaminodiphenylmethan.

Weitere Beispiele für derartige Diamine sind solche der allgemeinen Formel

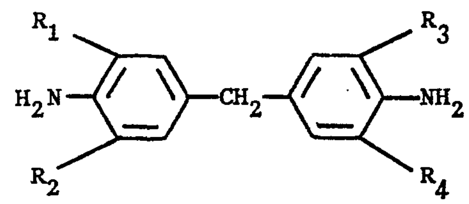

in welcher

$R_1$ für einen Alkylrest, vorzugsweise mit 1 bis 3 C-Atomen, und

$R_2$, $R_3$ und $R_4$ für Wasserstoff oder einen Alkylrest, vorzugsweise mit 1 bis 4 C-Atomen, stehen.

Selbstverständlich können erfindungsgemäß auch Gemische aus den genannten Diaminen eingesetzt werden.

Besonders bevorzugt ist die Verwendung von 1-Methyl-3,5-diethyl-2,4-diaminobenzol oder eine Mischung aus diesem mit 1-Methyl-3,5-diethyl-2,6-diaminobenzol.

Als gegebenenfalls mitzuverwendende Abmischkomponente (C) für das aromatische Diamin (B) kommen die aus der Polyurethanchemie an sich bekannten, mindestens 2 primäre Hydroxylgruppen aufweisenden Verbindungen mit einem Molekulargewicht von 62 bis 6 000 in Betracht, vorzugsweise jedoch primäre Hydroxylgruppen aufweisende Polyether, Polyester oder Polycarbonate der oben beschriebenen Art mit einem Molekulargewicht von 1 000 bis 5 000.

Die verwendeten Verstärkerfüllstoffe bestehen aus den z. B. bei der Herstellung von Luftreifen verwendeten Materialien wie Ruß, Kieselsäure, metallischen Verstärkungselementen, Glas, Weichmachern und/oder Streckölen. Diese Füllstoffe werden zweckmäßigerweise sehr homogen im NCO-Präpolymeren oder in Komponente (C) dispergiert.

Erfindungsgemäß werden noch gegebenenfalls folgende Hilfs- und Zusatzmittel eingesetzt :

Die für die Herstellung von zelligen Polyurethanelastomeren an sich bekannten Treibmittel, z. B. Wasser und/oder leicht flüchtige Substanzen wie Monofluortrichlormethan, Chlordifluormethan, Butan oder Diethylether.

Diese Treibmittel werden jedoch maximal in einer solchen Menge verwendet, daß das fertige Produkt ein Raumgewicht von mindestens 200 kg/m³, vorzugsweise mehr als 500 kg/m³, besitzt. Besonders bevorzugt werden jedoch erfindungsgemäß nichtzellige Produkte hergestellt.

Katalysatoren der an sich bekannten Art, z. B. tertiäre Amine, wie Triethylamin, Tributylamin, N-Methyl-morpholin, N-Ethyl-morpholin, N,N,N',N'-Tetramethyl-ethylen-diamin, Pentamethyl-diethylentriamin und höhere Homologe (DE-Offenlegungsschriften 2 624 527 und 2 624 528), 1,4-Diazabicyclo-(2,2,2)-octan, N-Methyl-N'-dimethylaminoäthyl-piperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthyl-amin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z. B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367 ; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

Oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphtyl-methandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysiloxan-polyoxyalkylen-Copolymere gemäß DE-Offenlegungsschrift 2 558 523.

Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

Durchführung des erfindungsgemäßen Verfahrens :

Die Reaktionskomponenten werden erfindungsgemäß nach dem an sich bekannten Gießverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Bei der Herstellung von zellulären Produkten kann erfindungsgemäß die Verschäumung auch in geschlossenen Formen durchgeführt werden.

Dabei wird das Reaktionsgemisch in eine Form eingetragen. Als Formmaterial kommt Metall, z. B. Aluminium, oder Kunststoff, z. B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann

man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter « overcharging » gearbeitet ; eine derartige Verfahrensweise ist z. B. aus den US-Patentschriften 3 178 490 und 3 182 104 bekannt.

Bei der Formverschäumung werden vielfach an sich bekannte « äußere Trennmittel », wie Siliconöle, mitverwendet. Man kann aber auch sogenannte « innere Trennmittel », gegebenenfalls im Gemisch mit äußeren Trennmitteln, verwenden, wie sie z. B. aus den DE-Offenlegungsschriften 2 121 670 und 2 307 589 bekannt geworden sind.

Die erfindungsgemäß hergestellten Elastomere sind relativ weich, weisen jedoch hervorragende mechanische Eigenschaften auf. Sie werden überall dort eingesetzt, wo hochwertige, weiche, kautschukelastische Stoffe benötigt werden und können daher Gummi in vielen seiner Anwendungsgebiete ersetzen. Insbesondere eignen sich die erfindungsgemäß hergestellten nichtzellulären Elastomere für die Herstellung von Luftreifen bzw. Bestandteilen derartiger Reifen (vor allem für die Herstellung abriebfester Laufflächen), aber auch für flexible Karosserieteile von Fahrzeugen, Rammschutz- und Scheuerleisten, Dichtungen, Keilriemen, Laufrollen und Matten. Zelluläre Elastomere werden z. B. für Federelemente, Stoß- und Schwingungsdämpfer sowie Schuhsohlen eingesetzt und allgemein für dieselben Anwendungsgebiete wie Moosgummi.

Die folgenden Beispiele erläutern das erfindungsgemäße Verfahren. Wenn nicht anders vermerkt, sind Mengenangaben als Gewichtsteile bzw. Gewichtsprozente zu verstehen.

## Beispiel 1 (Vergleichsversuch)

2 000 g eines linearen Polypropylenglykolethers (Molekulargewicht 2 000 ; OH-Zahl 56) werden mit 920 g 4,4'-Diisocyanatodiphenylmethan auf 70 °C erwärmt und bis zu einem NCO-Gehalt von 7,65 % bei dieser Temperatur gehalten.

500 g des NCO-Präpolymeren werden bei 80 °C kurz im Wasserstrahlvakuum entgast und innerhalb von 30 Sekunden mit 40 g Butandiol innig vermischt. Der Reaktionsansatz wird in eine auf 100 °C erwärmte Form gegossen und nach der Entformung noch 24 Stunden bei 110 °C getempert. Die Gießzeit der Mischung beträgt ca. 2 bis 3 Minuten. Nach 10 Minuten kann der Probekörper entformt werden. Die mechanischen Eigenschaften des Elastomers sind in Tabelle 1 angegeben.

## Beispiel 2 (Vergleichsversuch)

Wiederholt man Beispiel 1, verwendet jedoch an Stelle des reinen 4,4'-Diisocyanatodiphenylmethans eine Mischung von 2,4'- und 4,4'-Diisocyanatodiphenylmethan im Verhältnis 1 : 1, so erhält man ein Präpolymer mit einem NCO-Gehalt von 7,6 %.

Werden jeweils 500 g dieses NCO-Präpolymeren in der in Beispiel 1 angegebenen Weise mit 40 g Butandiol-1,4 vernetzt, so erhält man nach einer Gießzeit von 3 Minuten nur unelastische, weiche Materialien mit thermoplastischem Charakter und allgemein im Vergleich zu Beispiel 1 sehr schlechtem Werteniveau.

## Beispiel 3 (Vergleichsversuch)

1 000 g eines linearen Polyesters aus Adipinsäure und Ethylenglykol (Molekulargewicht 2 000 ; OH-Zahl 56) werden mit 280 g 4,4'-Diisocyanatodiphenylmethan 3 Stunden auf 60 bis 70 °C erwärmt. Nach dem Erkalten erhält man ein festes, wachsartiges Addukt (NCO-Gehalt : 4 %).

500 g dieses NCO-Präpolymeren werden bei 80 bis 90 °C kurz entgast und mit 52,5 g geschmolzenem 3,5-Diamino-4-chlor-benzoesäureisobutylester innerhalb von 30 Sekunden homogen vermischt. Die Mischung wird nun in eine auf 100 °C vorgewärmte Form gegossen. Das reagierende Gemisch bleibt 2 bis 3 Minuten gießbar und verfestigt sich nach 6 bis 7 Minuten. Nach dem Entformen wird 24 Stunden bei 110 °C getempert.

Aus den Beispielen 1 und 2 geht hervor, daß bei einer Glykolvernetzung nur das 4,4'-Diisocyanatodiphenylmethan, jedoch nicht Gemische von 2,4'-/4,4'-Diisocyanatodiphenylmethan geeignet sind.

## Beispiel 4 (Vergleichsversuch)

100 Gew.-Teile eines Präpolymeren (NCO-Gehalt 10,7 %), hergestellt aus einem linearen Polypropylenglykolpolyether vom Molekulargewicht 1 000 (OH-Zahl 112) und 4,4'-Diisocyanatodiphenylmethan, werden mit einem Gemisch von 21,7 Gew.-Teilen 3,3'-Dichlordiphenylmethan-4,4'-diamin und 75 Gew.-Teilen eines linearen Polyethers vom Molekulargewicht 2 000, welcher endständig Ethylenoxidsequenzen

enthält, so daß mehr als 90 % primäre OH-Gruppen vorhanden sind, und 0,05 g Dibutylzinndilaurat vermischt.

Das reagierende Gemisch wird in eine vorgeheizte offene Form gegossen und nach weniger als 5 Minuten entformt.

Die mechanischen Daten der Formteile einer Rohdichte von ca. 1,02 g/cm$^3$ sind in Tabelle 2 zusammengefaßt.

Beispiel 5 (Vergleichsversuch)

100 Gew.-Teile eines Präpolymeren (NCO-Gehalt 4,9 %), hergestellt aus einem 7 % Ruß enthaltenden linearen Polypropylenglykolpolyether, welcher mit Ethylenoxid so modifiziert wurde, daß endständig 90 % primäre OH-Gruppen bei einer OH-Zahl um 28 resultieren, und 4,4'-Diisocyanatodiphenylmethan werden mit einem Gemisch aus 45 Gew.-Teilen desselben Polyethers und 12,3 Gew.-Teilen 3,3'-Dimethylmercapto-4,4'-diaminodiphenylmethan, 0,05 g Dibutylzinndilaurat und 0,5 g Dibutylphosphat vermischt.

Das reagierende Gemisch wird wie in Beispiel 4 beschrieben zu einem Elastomer verarbeitet. Mechanische Werte : siehe Tabelle 2.

Beispiele 6 und 7

Zur Präpolymerherstellung wird der in Beispiel 5 beschriebene Polyether der OH-Zahl 28 verwendet.

Das Präpolymere wird, wie in Beispiel 4 beschrieben, bei einer Kennzahl von 110 mit dem Amin zum Elastomer umgesetzt. Als Diamin wird ein technisches Gemisch von Diethyltoluylendiamin verwendet. Die Zusammensetzung des Diisocyanats, der NCO-Gehalt des Präpolymeren sowie die mechanischen Daten der erhaltenen Elastomere sind in Tabelle 2 angegeben.

Beispiele 8 bis 14

Untersucht wird der Einfluß des 2,2'-/2,4'-/4,4'-Isomerenverhältnisses in Präpolymersystemen auf Basis von Diisocyanatodiphenylmethan.

Zur Präpolymerherstellung wird der in Beispiel 5 beschriebene Polyether der OH-Zahl 28 verwendet, wobei das Präpolymer einen NCO-Gehalt von 5 % aufweist.

Als Vernetzer wird eine Kombination aus technischem Diethyltolylendiamin (14,2 Gew.-Teile auf 100 Gew.-Teile Präpolymer), 0,5 Gew.-Teilen Trimethylolpropan, 68 Gew.-Teilen des in Beispiel 5 beschriebenen Polyethers der OH-Zahl 28 sowie 17 Gew.-Teilen eines auf Trimethylolpropan gestarteten Polypropylenoxids mit endständigen Ethylenoxidsequenzen (OH-Zahl : 28) herangezogen.

Zur Katalyse wird eine Mischung aus 0,05 Gew.-Teilen Dibutylzinndilaurat und 0,3 Gew.-Teilen Diaminobicyclo-octan auf 100 Gew.-Teile Vernetzer verwendet.

Die mechanischen Daten der Elastomere sind in Tabelle 3 angegeben.

Aus den Beispielen 8 bis 14 läßt sich zweierlei erkennen :

1. Im Bereich eines Isomerenanteils von 35 bis 70 Mol.-% 2,4'-Diisocyanatodiphenylmethan befindet sich ein Optimum bezüglich des mechanischen Werteniveaus der Elastomeren, besonders hinsichtlich Zugfestigkeit und Weiterreißfestigkeit (Beispiele 9, 10, 11).
2. Mit zunehmendem Anteil an 2,2'-Diisocyanatodiphenylmethan sinken die mechanischen Werte ab (Beispiele 13, 14).

(Siehe die Tabellen 1, 2, 3, Seiten 10, 11, 12)

Tabelle 1 : Mechanische Eigenschaften der nach Beispiel 1 bis 3 hergestellten Elastomeren

| Beispiel | Art der Verlängerung ; Vernetzer | Isocyanat | NCO-Gehalt des Präpolymeren (%) | Mechanische Daten: Zugfestigkeit (MPa) | Bruchdehnung (%) | Weiterreißwiderstand (kN/m) | Shore-Härte | Elastizität (%) |
|---|---|---|---|---|---|---|---|---|
| 1 | Glykolvernetzung | 4,4'-Diisocyanatodiphenylmethan | 7,65 | 18 | 420 | 20 | 80 | 36 |
| 2 | Glykolvernetzung | 50 % 4,4'- und 50 % 2,4'-Diisocyanatodiphenylmethan | 7,7 | Das Material zeigt thermoplastische Eigenschaften | | | | |
| 3 | Aminvernetzung | 4,4'-Diphenylmethandiisocyanat | 4,0 | 20,5 | 520 | 42 | 91 | 34 |

Zugfestigkeit und Bruchdehnung wurden nach DIN 53504 bestimmt ;
Weiterreißwiderstand nach DIN 53515 ; Shore-A-Härte nach DIN 53503 und Elastizität nach DIN 53512.

Tabelle 2 : Mechanisches Werteniveau der nach den Beispielen 4 bis 7, erhaltenen Elastomeren

| Beispiel Nr. | Zusammensetzung des Diisocyanatodiphenylmethans 2,4'-% | Zusammensetzung des Diisocyanatodiphenylmethans 4,4'-% | NCO-Gehalt des Präpolymeren % | Amin | Zugversuch nach DIN 53504 σ 100 % (MPa) | Zugversuch nach DIN 53504 σ 300 % (MPa) | Zugversuch nach DIN 53504 σ B (Mpa) | Zugversuch nach DIN 53504 ε B (%) | Weiterreiß-widerstand (kN/m) | Shore-A-Härte |
|---|---|---|---|---|---|---|---|---|---|---|
| 4 | — | 100 | 10,7 | 3,3'-Dichlor-4,4'-diamino-diphenylmethan | 5,7 | 7,0 | 9,3 | 320 | 39,5 | 90 |
| 5 | — | 100 | 4,9 | 3,3'-Dimethyl-mercapto-4,4' diaminodiphenyl-methan | — | — | 1,2 | 37 | 6,9 | 56 |
| 6 | — | 100 | 3,6 | technisches Diethyltoluylendiamin | 3,4 | 5,9 | 9,9 | 700 | 24,7 | 71 |
| 7 | 50 | 50 | 3,2 | " | 3,2 | 6,2 | 18,4 | 833 | 26,8 | 69 |

Tabelle 3 : Mechanisches Wertenlveau der nach den Beispielen 8 bis 14 erhaltenen Elastomeren

| Beispiel Nr. | Zusammensetzung des Diisocyanatodiphenylmethans (%) 2,2′ | 2,4′ | 4,4′ | NCO-Gehalt des Präpolymeren % | Amin | Zugversuch nach DIN 53504 σ 100 % (MPa) | σ 300 % (MPa) | σ B (%) | ε B (%) | Weiterreißwiderstand (kN/m) | Shore-A-Härte |
|---|---|---|---|---|---|---|---|---|---|---|---|
| 8 | | | 100 | 4,97 | technisches Diethyltoluylendiamin | 2,0 | 3,80 | 11,1 | 850 | 16,0 | 60 |
| 9 | | 70 | 30 | 4,94 | " | 2,0 | 3,85 | 13,3 | 950 | 18,7 | 60 |
| 10 | | 50 | 50 | 4,88 | " | 2,0 | 3,8 | 14,5 | 1 100 | 21,0 | 59 |
| 11 | | 35 | 65 | 4,93 | " | 1,95 | 3,8 | 12,5 | 980 | 18,0 | 60 |
| 12 | | 15 | 85 | 5,0 | " | 2,0 | 3,85 | 11,8 | 880 | 16,5 | 60 |
| 13 | 10 | 50 | 40 | 4,91 | " | 1,8 | 3,4 | 13,5 | 1 125 | 18,3 | 58 |
| 14 | 20 | 50 | 30 | 4,96 | " | 1,6 | 3,1 | 11,5 | 1 150 | 18,3 | 56 |

**Ansprüche**

1. Verfahren zur Herstellung von gegebenenfalls zellförmigen Polyurethanharnstoff-Elastomeren mit einer Rohdichte von mehr als 200 kg/m$^3$ durch Gießen eines Reaktionsgemisches aus

A) einem NCO-Präpolymeren, hergestellt aus

a) 1 Mol einer mindestens 2 zerewitinoffaktive Wasserstoffatome aufweisenden Verbindung vom Molekulargewicht 400 bis 10 000 und

b) 2 bis 10 Mol Diisocyanatodiphenylmethan,

B) einem aromatischen Diamin, gegebenenfalls

C) bis zu 50 Mol.-%, bezogen auf Komponente B, eines primäre Hydroxylgruppen aufweisenden Polyols mit einem Molekulargewicht von 62 bis 6 000, sowie gegebenenfalls

D) Treibmitteln, Aktivatoren, Füllstoffen und weiteren an sich bekannten Zusatzstoffen, wobei das Äquivalentverhältnis zwischen Komponente A und den Komponenten B + C zwischen 0,9 : 1 und 1,3 : 1 liegt, in eine Form, Aushärten des Reaktionsgemisches in der Form und anschließende Entformung, dadurch gekennzeichnet, daß das NCO-Präpolymere A unter Verwendung eines Isomerengemisches, bestehend aus

15 bis 80 Mol.-% 2,4'-Diisocyanatodiphenylmethan,
20 bis 85 Mol.-% 4,4'-Diisocyanatodiphenylmethan und
0 bis 20 Mol.-% 2,2'-Diisocyanatodiphenylmethan

hergestellt worden ist und daß man als aromatische Diamine B) solche einsetzt, die in ortho-Stellung zur Aminogruppe mindestens einen Alkylsubstituenten besitzen.

2. Verfahren nach Anspruch 1, dadurch gekennzeichnet, daß das NCO-Präpolymere A) unter Verwendung eines Isomerengemisches, bestehend aus

35 bis 70 Mol.-% 2,4'-Diisocyanatodiphenylmethan,
30 bis 65 Mol.-% 4,4'-Diisocyanatodiphenylmethan und
0 bis 15 Mol.-% 2,2'-Diisocyanatodiphenylmethan

hergestellt worden ist.

3. Verfahren nach Ansprüchen 1 und 2, dadurch gekennzeichnet, daß bei der Herstellung des NCO-Präpolymeren A ein Molverhältnis der Komponenten a) und b) zwischen 1 : 2,5 und 1 : 5 eingehalten worden ist.

4. Verfahren nach Ansprüchen 1 bis 3, dadurch gekennzeichnet, daß man als aromatische Diamine B) alkylsubstituierte Phenylendiamine und Diphenylmethandiamine einsetzt.

5. Verfahren nach Ansprüchen 1 bis 4, dadurch gekennzeichnet, daß man als aromatische Diamine B) solche der allgemeinen Formel

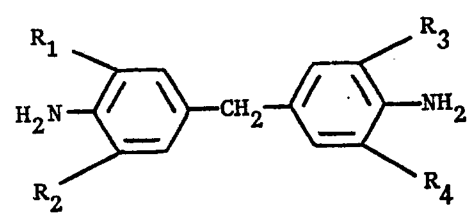

einsetzt, in welcher

$R_1$ für einen Alkylrest und

$R_2$, $R_3$ und $R_4$ für Wasserstoff oder einen Alkylrest stehen.

6. Verfahren nach Ansprüchen 1-4, dadurch gekennzeichnet, daß man als aromatische Diamine B) 1-Methyl-3,5-diethyl-2,4-diaminobenzol oder eine Mischung aus diesem mit 1 Methyl-3,5-diethyl-2,6-diaminobenzol einsetzt.

**Claims**

1. A process for the production of optionally cellular polyurethane urea elastomers having a gross density of more than 200 kg/m$^3$ by casting a reaction mixture of

A) an iscyanate prepolymer produced from

a) 1 mole of a compound containing at least 2 Zerewitinoff-active hydrogen atoms and having a molecular weight of from 400 to 10,000 and

b) 2 to 10 moles of diisocyanatodiphenyl methane,

B) an aromatic diamine, optionally

C) up to 50 mole percent, based on component B, of a polyol containing primary hydroxyl groups and having a molecular weight of from 62 to 6 000, and optionally

D) blowing agents, activators, fillers and other additives known *per se*, the equivalent ratio between component A and components B + C amounting to between 0.9 : 1 and 1.3 : 1,

into a mould, hardening the reaction mixture in the mould and subsequently removing it from the mould, characterised in that the isocyanate prepolymer A has been produced using an isomer mixture consisting of

from 15 to 80 mole percent of 2,4'-diisocyanatodiphenyl methane,
from 20 to 85 mole percent of 4,4'-diisocyanatodiphenyl methane and
from 0 to 20 mole percent of 2,2'-diisocyanatodiphenyl methane,

and in that the aromatic diamines B) used are those which contain at least one alkyl substituent in the ortho position to the amino group.

2. A process according to Claim 1, characterised in that the isocyanate prepolymer A) has been produced using an isomer mixture consisting of

from 35 to 70 mole percent of 2,4'-diisocyanatodiphenyl methane,
from 30 to 65 mole percent of 4,4'-diisocyanatodiphenyl methane and
from 0 to 15 mole percent of 2,2'-diisocyanatodiphenyl methane.

3. A process according to Claims 1 and 2, characterised in that a molar ratio between components a) and b) of between 1 : 2,5 and 1 : 5 was maintained during production of the isocyanate prepolymer A.

4. A process according to Claims 1 to 3, characterised in that the aromatic diamines B) used are alkylsubstituted phenylene diamines and diphenyl methane diamines.

5. Process according to Claims 1 to 4, characterised in that the aromatic diamines B) used are those of the general formula

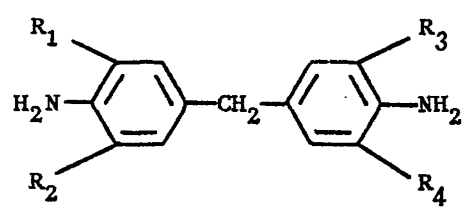

in which

$R_1$ represents an alkyl radic: and

$R_2$, $R_3$ and $R_4$ represent hydrogen or an alkyl radical.

6. Process according to Claims 1-4, characterised in that the aromatic diamines B) used are 1-methyl-3,5-diethyl-2,4-diaminobenzene or a mixture thereof with 1-methyl-3,5-diethyl-2,6-diaminobenzene.

**Revendications**

1. Procédé de préparation d'élastomères d'urées polyuréthaniques éventuellement cellulaires ayant une masse volumique de plus de 200 kg/m$^3$ par coulée d'un mélange réactionnel :

A) d'un prépolymère de NCO préparé à partir de

a) 1 mole d'un composé comportant au moins deux atomes d'hydrogène actifs de Zerewitinoff, d'un poids moléculaire de 400 à 10.000, et

b) 2 à 10 moles de diisocyanato-diphénylméthane,

B) d'une diamine aromatique, éventuellement

C) jusqu'à 50 % molaires, calculé sur le composant (B), d'un polyol comportant des groupes hydroxy primaires et ayant un poids moléculaire de 62 à 6.000, ainsi qu'éventuellement

D) des agents moussants, des activateurs, des charges et d'autres additifs connus en soi, le rapport équivalent entre le composant (A) et les composants (B) + (C) se situant entre 0,9 : 1 et 1,3 : 1, dans un moule, puis par durcissement du mélange réactionnel dans le moule et ensuite par démoulage, caractérisé en ce qu'on prépare le prépolymère de NCO (A) en utilisant un mélange d'isomères comprenant :

15 à 80 % molaires de 2,4'-diisocyanato-diphénylméthane,

20 à 85 % molaires de 4,4'-diisocyanato-diphénylméthane, et
0 à 20 % molaires de 2,2'-diisocyanato-diphénylméthane

et, comme diamines aromatiques (B), on utilise celles comportant au moins un substituant alkyle en position ortho vis-à-vis du groupe amino.

2. Procédé suivant la revendication 1, caractérisé en ce qu'on prépare le prépolymère de NCO (A) en utilisant un mélange d'isomères comprenant :

35 à 70 % molaires de 2,4'-diisocyanato-diphénylméthane,
30 à 65 % molaires de 4,4'-diisocyanato-diphénylméthane, et
0 à 15 % molaires de 2,2'-diisocyanato-diphénylméthane.

3. Procédé suivant les revendications 1 et 2, caractérisé en ce que, lors de la préparation du prépolymère de NCO (A), on maintient les composants (a) et (b) dans un rapport molaire compris entre 1 : 2,5 et 1 : 5.

4. Procédé suivant les revendications 1 à 3, caractérisé en ce que, comme diamines aromatiques (B), on utilise des phénylène-diamines et des diphényl-méthane-diamines substituées par des groupes alkyle.

5. Procédé suivant les revendications 1 à 4, caractérisé en ce que, comme diamines aromatiques (B), on utilise celles répondant à la formule générale :

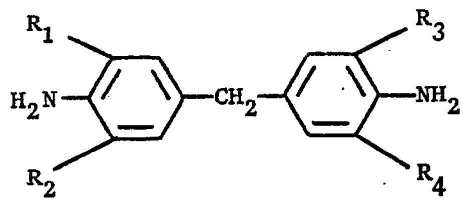

dans laquelle

$R_1$ représente un groupe alkyle, et

$R_2$, $R_3$ et $R_4$ représentent chacun un atome d'hydrogène ou un groupe alkyle.

6. Procédé suivant les revendications 1 à 4, caractérisé en ce que, comme diamines aromatiques (B), on utilise le 1-méthyl-3,5-diéthyl-2,4-diaminobenzène ou un mélange de ce dernier avec le 1-méthyl-3,5-diéthyl-2,6-diaminobenzène.